# EUROPEAN PATENT APPLICATION

(11) **EP 4 764 611 A1**
(43) Date of publication of application: **24.06.2026**
(21) Application number: 24222314.7
(22) Date of filing: 20.12.2024
(51) Int. Cl.: G01S 19/24

(54) **METHOD AND APPARATUS FOR TRACKING RECEIVED SIGNALS**

(71) Applicant: u-blox AG, 8800 Thalwil (CH)
(72) Inventor: Buergi, Clemens, 8800 Thalwil (CH); Bos, Victor, 33720 Tampere (FI); Huovinen, Toni, 33720 Tampere (FI); Aho, Eero, 33720 Tampere (FI)
(74) Representative: Epping - Hermann - Fischer

(57) **Abstract**

This disclosure relates to a method for tracking received signals comprises: tracking (101) at least two received signals on at least two tracking channels; tapping (102) the received signal of each of the at least two tracking channels; multiplexing (103) the tapped received signals onto at least one redundant tracking channel; comparing (106) an output of the at least one redundant tracking channel with an output of each of the at least two tracking channels; and determining (107) whether an error occurred in the tracking of a first signal of the at least two received signals on a corresponding first tracking channel of the at least two tracking channels by determining whether a mismatch between an output of the first channel and a corresponding portion of an output of the redundant tracking channel occurred.

## Description

### TECHNICAL FIELD

This disclosure relates to a method and an apparatus for tracking received signals. The disclosure further relates to a corresponding computer program product and a corresponding computer readable storage medium.

### BACKGROUND ART

In communication technologies, in particular in wireless communication technologies, tracking a signal on a tracking channel is a sensitive task of signal reception. For example in a Global Navigation Satellite System, GNSS, a GNSS receiver is tracking a GNSS signal from a specific satellite or frequency. Correspondingly, any other type of signal besides GNSS may be tracked accordingly. A channel, on which such signal is tracked, is called a tracking channel.

If a problem on the tracking channel occurs, the corresponding tracked signal may not be received correctly. This may be particularly problematic in cases such as in safety applications, in which it is not detected that a problem on the tracking channel occurred, and an erroneously received signal is processed further in the device, without noting that the tracking of the signal is impaired. Accordingly, it is an object of this disclosure to present a method, apparatus, computer program product, and computer readable storage medium, with which the above-mentioned problem is solved or mitigated.

### SUMMARY OF INVENTION

The above-mentioned object is solved by the subject-matter of the attached independent claims. Further embodiments are disclosed in the attached dependent claims.

According to a first aspect of the disclosure, a method for tracking received signals comprises:
- tracking at least two received signals on at least two tracking channels;
- tapping the received signal of each of the at least two tracking channels;
- multiplexing the tapped received signals onto at least one redundant tracking channel;
- comparing an output of the at least one redundant tracking channel with an output of each of the at least two tracking channels; and
- determining whether an error occurred in the tracking of a first signal of the at least two received signals on a corresponding first tracking channel of the at least two tracking channels by determining whether a mismatch between an output of the first channel and a corresponding portion of an output of the redundant tracking channel occurred.

An advantage herein is that a correct tracking of the at least two received signals on the at least two tracking channels may be supervised. In case an error occurs on any one of the at least two tracking channels, this cannel being named a first tracking channel, its signal being named a first signal, this error may be detected by detecting a mismatch between the output of the first channel (i.e., the faulty channel of the at least two tracking channels) and a corresponding portion of an output of the redundant tracking channel.

Furthermore, a number of redundant tracking channels is lower than a number of the at least two tracking channels, the at least two tracking channels also being called "primary tracking channels" in the context of this application, in order to easily distinguish them from the at least one redundant tracking channel. By multiplexing the tapped received signals of the at least two primary tracking channels onto the at least one redundant tracking channel, all signals of the at least two primary tracking channels may be redundantly checked with a reduced number of redundant tracking channel. Any combination of multiple primary tracking channels and one or more redundant tracking channels within that context are possible.

With the described method, functional safety in signal tracking may be increased. Corresponding functional safety standards may be defined in standards like: ISO 26262 and IEC 61508. With this method, it can be detected whether tracking channels are not working correctly due to faults in the tracking channels.

The terms "first signal" and "first tracking channel", in the context of this disclosure, are to be understood as indicating a signal/channel, with respect to which an error was determined, i.e., a mismatch was detected. This, however, may refer to any of the at least two tracking channels and their corresponding respective signals. For example, this may also refer to more than just one first signal/first tracking channel, in case mismatches are detected on multiple such "first tracking channels".

A mismatch between the output of the first channel and the corresponding portion of the output of the redundant tracking channel may be, for example, that at least one bit in the respective signal is flipped and/or that at least one bit is missing. Any other kind of mismatch, however, may also be detected herein.

For example, in case of GNSS or other satellite communication, one channel is used for tracking a signal received from one specific satellite, or multiple channels are used for tracking multiple signals received from one specific satellite. Alternatively or additionally, one channel is used for tracking a signal of a dedicated frequency. This may correspondingly also be applied to other fields than GNSS.

The at least one redundant tracking channel may be set up identical to the at least two primary tracking channels. With other words, any processing that is performed on the signal on the at least two primary tracking channels is correspondingly performed on the at least one redundant tracking channel, in order to have identical results for matching on the respective channels for a respective portion of the signal on the at least one redundant tracking channel, in case no error occurred.

Multiplexing in the context of this application may be referring to time-division multiplexing. In time-division multiplexing, different tapped received signals of the at least two tracking channels are provided to the at least one redundant tracking channel in different time units...

The at least one redundant tracking channel, in the context of this disclosure, may be redundant in that it may be used as a channel that does not track an individual signal, but on which the at least two received signals of the at least two tracking channels are redundantly tracked, each of the at least two received signals in respective time units.

Tapping the received signal of each of the at least two tracking channels may be understood as splitting the at least two received signals and providing one part of the split of the at least two received signals to the respective primary tracking channels and another part to a multiplexing module, which may perform the multiplexing onto the at least one redundant tracking channel. In particular, the tapping of the received signal of each of the at least two tracking channels may refer to tapping an input of the at least two tracking channels. With other words, the input of each of the at least two tracking channels is linked to an input of the at least one redundant tracking channel.

According to at least one embodiment, the method further comprises the steps:
- tapping an output of each of the at least two tracking channels; and
- multiplexing the tapped output of each of the at least two tracking channels;
wherein comparing the output of the at least one redundant tracking channel with the output of each of the at least two tracking channels comprises:
- comparing the output of the at least one redundant tracking channel with the multiplexed tapped output of each of the at least two tracking channels.

An advantage thereof is that an efficient and reliable implementation of comparing the output of the at least one redundant tracking channel with the output of each of the at least two tracking channels is provided.

For example, the terms input and output of the at least two tracking channels may refer to an input and output of those tracking channels with regard to a baseband processing block of a corresponding receiver. However, other parts of the tracking channels may also serve for the tapping of the respective signals. It is to be understood that all processing modules of the primary tracking channels, that lie between such input and output may be supervised and errors thereof may be detected when comparing the respective output of the primary channels with corresponding portions of an output of the redundant tracking channel. Accordingly, input and output may be chosen accordingly, to either supervise a large portion of the processing of the tracking channel, or select, for example, specifically critical parts of the tracking channel.

According to at least one embodiment, the tracking of the at least two received signals on the at least two tracking channels is performed continuously.

This allows an uninterrupted tracking of the respective signals on the primary tracking channels.

According to at least one embodiment, if occurrence of an error in the tracking of the first signal is determined, at least one of the following steps is performed:
- flagging current data on the first tracking channel as invalid;
- resetting the first tracking channel;
- disabling the first tracking channel;
- increasing a counter that counts a number of times the first tracking channel has failed.

An advantage thereof is that a reaction to detecting an error in the tracking of a signal on a primary tracking channel may be performed, which can increase reliability and/or improve availability of a receiver.

For example, in case current data on the faulty tracking channel is flagged as invalid, the information that said data may not be trusted is obtained and can be considered for further processing. Current, in this context, may be understood as, for example relating to data being received during a time slot, during which the error was detected on the respective first channel. For example, data which is flagged as invalid may be neglected, therefore improving reliability of the receiver.

Moreover, resetting the first tracking channel, on which the error occurred, may help restoring said primary tracking channel to a correctly functioning state. By resetting the first tracking channel, the first tracking channel is restarted. In case a transient failure (also called soft failure), i.e., a failure that can be resolved by resetting a channel, occurred on the first primary channel, resetting said channel can improve availability of the receiver.

Moreover, disabling the faulty channel allows the receiver to continue tracking of signals with the remaining primary tracking channels, whilst avoiding erroneous data being further received on the faulty channel, thereby improving both availability and reliability of received data. In particular in case a hard failure, i.e., a failure that cannot be resolved by resetting the channel, occurred, a disabling of a channel may be advantageous. By disabling a faulty primary tracking channel, a receiver may continue operation with degraded mode by using the rest of the primary tracking channels.

An advantage of increasing a counter is that it can be tracked, how many times an error occurred on a specific primary channel.

According to at least one embodiment, the method further comprises the step:
- determining, whether the counter reached a predetermined threshold; wherein, if the counter reached the predetermined threshold, the first channel is disabled.

An advantage thereof is that the first channel is not necessarily disabled immediately after an error was detected. For example, the first channel may first be reset and/or it may be observed whether an error occurs multiple times or whether it could have occurred randomly or was resolved by resetting the channel. This further may improve availability of the receiver since less channels need to be disabled.

According to at least one embodiment, a time domain is divided into time slots and the tapped received signals are multiplexed onto the at least one redundant tracking channel with one tapped received signal per time slot.

An advantage thereof is that an efficient and reliable tapping and multiplexing of the received signals onto the at least one redundant tracking channel is provided. Subsequent time slots, in particular, may be of same length. A time slot, in this context, refers to the duration of time, during which a specific received signal is tracked on the at least one redundant tracking channel.

For example, a time slot may correspond to the time between measurements of the received signals, which may also be called an epoch. The time slot may be equal, longer, or shorter than an epoch. For example, this may be the case for GNSS measurements. For example, such time between measurements, i.e., an epoch, may have a length of 100 milliseconds. In case the time slot relates to the epoch being 100 milliseconds, each primary tracking channel may be redundantly tracked on the redundant tracking channel for 100 milliseconds and their results being compared during those 100 milliseconds. Alternatively, the epoch may be used for redundantly tracking multiple channels as well. For example, if there are five primary channels and one redundant channel, each primary channel may be redundantly tracked for 20 milliseconds. With other words, in 100 milliseconds (i.e., the epoch), each of the five primary tracking channels is tracked once. As another example, if there are six primary tracking channels and one redundant tracking channel, and if each primary channel is redundantly tracked for a duration of 50 milliseconds, then, in one epoch, i.e., in 100 milliseconds, two primary tracking channels have been redundantly tracked. Then, a total of 300 milliseconds, i.e., three epochs, is used to redundantly track and compare all six primary tracking channels once. As another example, if there are two primary tracking channels and one redundant tracking channel, and if each primary tracking channel is redundantly tracked for a duration of 200 milliseconds, then, each primary tracking channel is tracked for two epochs of 100 milliseconds. Accordingly, a total of 400 milliseconds, i.e., four epochs, is used to redundantly track and compare both primary tracking channels once.

A length of how long each individual primary tracking channel is tracked on the redundant tracking channel may be chosen based on a reliability requirement, for example. For example, in case the received signals are to be checked for errors more frequently, shorter time slots may be used. For example, a time to alert, TTA, requirement, i.e., a requirement regarding how fast an error on a primary tracking channel is to be reported, may be considered for choosing the length of tracking each primary tracking channel on the redundant tracking channel. However, in case a switching frequency of the multiplexing module is to be reduced, longer time slots may be used. For example, a length of 1 second, 500 milliseconds, or 100 milliseconds (as in the examples above) may be used. Other suitable lengths, however, may also be used. Additionally, an amount of time that is required to configure the redundant tracking channel for tracking a new signal may be considered for determining a length of the time slot.

According to a second aspect, an apparatus for tracking received signals comprises at least two tracking channels, each of the at least two tracking channels being configured to track a received signal. The apparatus further comprises at least one redundant tracking channel and at least one first multiplexing module, the at least one first multiplexing module being configured to tap the received signal of each of the at least two tracking channels and to multiplex the tapped received signals onto the at least one redundant tracking channel. The apparatus further comprises at least one comparator module, configured to compare the multiplexed signal on the at least one redundant tracking channel with each of the received signals on the at least two tracking channels. The apparatus also comprises a decision logic module, configured to determine whether an error occurred in the tracking of a first signal of the at least two received signals on a corresponding first tracking channel of the at least two tracking channels by determining whether a mismatch between an output of the first channel and a corresponding portion of an output of the redundant tracking channel occurred.

Advantages and embodiments of the apparatus in general correspond to the advantages and embodiments discussed above with regard to the first aspect. Any feature disclosed in the context of the first aspect may be, correspondingly, applied to the second aspect. The decision logic module may further decide about an action to be taken in case an error is detected. For example, the decision logic module may decide to perform any of the actions or any combination thereofw, which are discussed as reactions to a detected error with regard to the first aspect.

In the context of this application, the at least two tracking channels and the at least one redundant tracking channel, may be implemented as hardware tracking channels. Alternatively, those tracking channels may also be implemented as software tracking channels. The at least one first multiplexing module, the at least one comparator module, and the decision logic module may be implemented as hardware modules or as software modules, or as a combination thereof. For implementing any of the mentioned entities as software, one or more processing units may be used.

The apparatus may be a receiver of the at least one signal or may be part of a receiver of the at least one signal.

According to at least one embodiment, the apparatus further comprises at least one second multiplexing module, configured to tap the output of each of the at least two tracking channels, and to multiplex the tapped output of each of the at least two tracking channels, wherein the at least one comparator module is specifically configured to compare the output of the at least one redundant tracking channel with the multiplexed tapped output of each of the at least two tracking channels.

The at least one second multiplexing module may be implemented as hardware module or as software module, or as a combination thereof. The at least one second multiplexing module may be of identical implementation as the at least one first multiplexing module.

According to at least one embodiment, the at least one first multiplexing module and the at least one second multiplexing module are synchronized to tap a signal of the same tracking channel of the at least two tracking channels at a specific time slot. For example, the multiplexing modules may be configured at the start of each time slot such that both multiplexing modules are selecting the same primary tracking channel. A clock of the first and second multiplexing module may be synchronized.

According to at least one embodiment, the received signals are global navigation satellite system, GNSS, signals.

An advantage thereof is that in particular in GNSS receivers, usually a large number of tracking channels is used. There may be, for example, tens or hundreds of primary tracking channels in such a receiver. Providing high reliability due to redundantly checking the signal on primary tracking channels with a redundant tracking channel, whilst keeping a number of redundant tracking channels low, therefore, has a high impact in this field.

According to at least one embodiment, the apparatus further comprises a counter module, wherein the counter module is configured to track a number of times an occurrence of an error in the tracking of the first signal has been determined.

In particular, the counter module may separately keep track of error occurrences on each of the at least two primary tracking channels. The counter module may be implemented as hardware module or as software module, or as a combination thereof.

According to a third aspect, a computer program product comprises instructions which, when the computer program is executed on a computer, enables the computer to perform the method according to the first aspect or any possible embodiment thereof.

According to a fourth aspect, a computer-readable storage medium comprises the computer program product according to the third aspect.

Advantages and embodiments of the third and/or fourth aspect in general correspond to the advantages and embodiments discussed above with regard to the first and/or second aspect. Any feature disclosed in the context of the first and/or second aspect may be, correspondingly, applied to the third and/or fourth aspect.

### BRIEF DESCRIPTION OF DRAWINGS

The above-mentioned aspects of the disclosure and their embodiments will be explained in more detail in the following with the aid of the drawings. Elements and functional blocks having the same or similar function bear the same reference numerals throughout the drawings but may not need to be identical in all aspects. Hence their description is not necessarily repeated in following drawings and may only be provided at their first appearance.

In the drawings:
- Figure 1: shows a flowchart of a method for tracking received signals according to one embodiment of the disclosure;
- Figure 2: shows a schematic drawing of an apparatus for tracking received signals according to one embodiment of the disclosure;
- Figure 3: shows a schematic drawing of an apparatus for tracking received signals according to another embodiment of the disclosure; and
- Figure 4: shows a flowchart of a method performed by a decision logic module according to one embodiment of the disclosure.

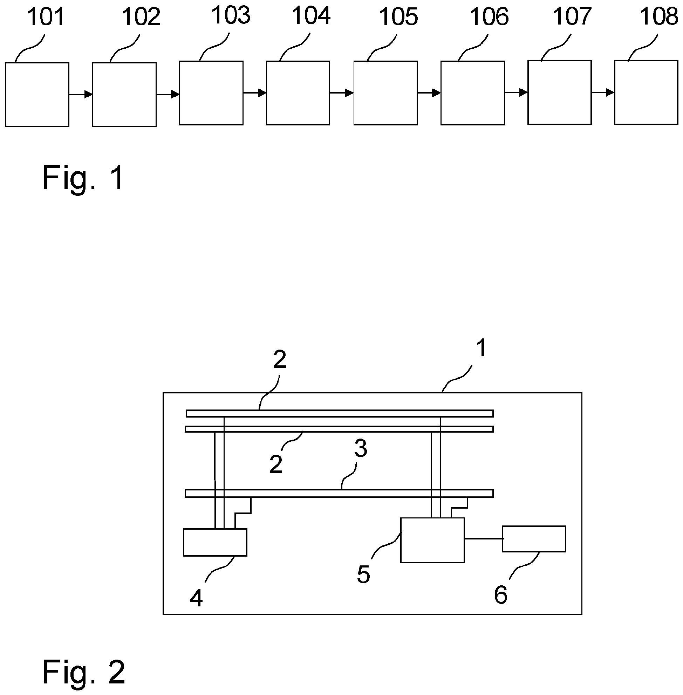

Figure 1 shows a flowchart of a method for tracking received signals according to one embodiment of the disclosure. The method may be applied, for example, to a GNSS receiver, or to any other signal receiver that receives and tracks signals on tracking channels.

In a step 101, at least two received signals on at least two tracking channels are tracked. Processing of the tracking of the at least two received signals may be performed according to manners known in the art. The tracking may be performed, in particular, in the baseband block of signal processing. In particular, the at least two received signals may be digital signals, i.e., the method may be performed after the received signals passed an analog/digital converter. The tracking of the at least two received signals may, therefore, be performed in digital area and may be implemented as hardware and/or software. The tracking channels themselves, in particular, may be implemented as hardware.

In a step 102, the received signal of each of the at least two tracking channels is tapped and, in a step 103, multiplexed onto at least one redundant tracking channel. With other words, the input of each of the at least two tracking channels is linked to an input of the at least one redundant tracking channel.

In a step 104, an output of each of the at least two tracking channels is tapped and, in a step 105, multiplexed together. The multiplexing of the outputs of the at least two tracking channels is synchronized with the multiplexing of the inputs of the at least two tracking channels. In this context, in case time-division multiplexing is used, the input and output of the same tracking channel are used for a distinct time slot, and time slots are synchronized in time. For example, the multiplexing modules may be configured at the start of each time slot such that both multiplexing modules are selecting the same primary tracking channel. A clock of the first and second multiplexing module may be synchronized.

In a step 106, an output of the at least one redundant tracking channel is compared with the multiplexed tapped output of each of the at least two tracking channels. It can be considered, after the multiplexed outputs of each of the at least two tracking channels have been compared and successfully matched with the respective portions of the output of the at least one redundant tracking channel, that the at least one redundant tracking channel and the at least two tracking channels function correctly. In case the multiplexed outputs of the at least two tracking channels does not match the output of the at least one redundant tracking channel for at least one of the at least two tracking channels, i.e., the outputs of any one or more than one of the at least two tracking channels does not match, in its corresponding portion (in its corresponding time slot for time-division multiplexing), the output of the at least one redundant tracking channel, it can be assumed that the respective tracking channel(s) of the at least two tracking channels is/are not functioning correctly. In case all of the outputs of the at least two tracking channels cannot be matched with the corresponding portions of the output of the at least one redundant channel, it can be assumed that all of the at least two tracking channels is functioning incorrectly, and/or the at least one redundant tracking channel is functioning incorrectly.

In a step 107 it is determined that an error on the respective tracking channel of the at least two tracking channels occurred and/or that an error in the at least one redundant tracking channel occurred, in case any of the mismatching scenarios described with respect to step 106 has been detected.

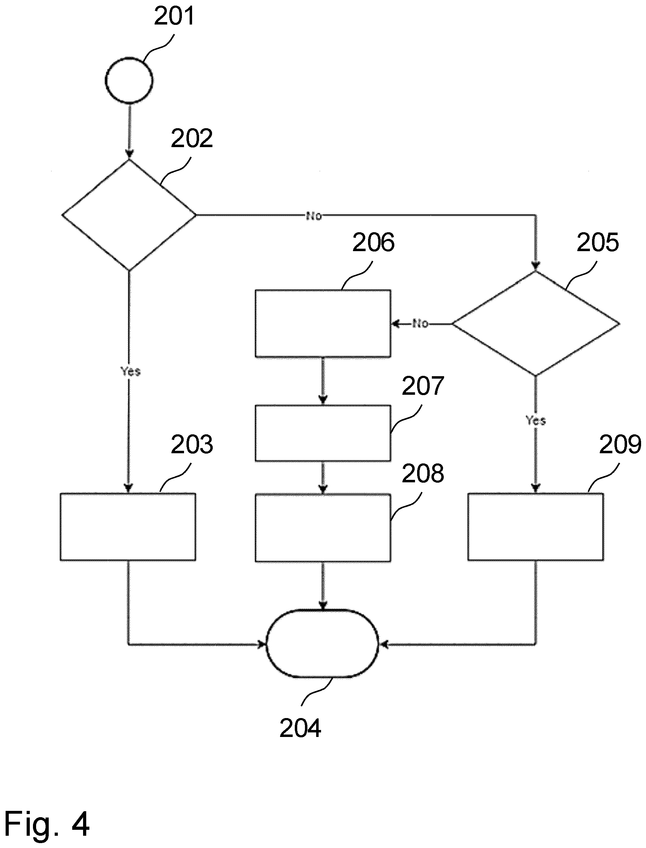

In a step 108, if occurrence of an error in the tracking of a signal of any of the at least two tracking channels is determined, current data on the faulty tracking channel is flagged as invalid and/or the faulty tracking channel is reset and/or the faulty tracking channel is disabled and/or a counter that counts a number of times the first tracking channel has failed is increased. This will be discussed in more detail with regard to Figure 4 below.

Further, concerning Figure 1, it may be understood that some of the steps described herein are optional and the method may be performed without said optional steps as well. In particular, steps 104, 105, and/or 108 may be considered being optional.

Figure 2 shows a schematic drawing of an apparatus 1 for tracking received signals according to one embodiment of the disclosure. The apparatus 1 shown in Figure 2 may be a receiver or may be an apparatus comprised in a receiver. Figure 2 focuses on the parts of such a receiver, which are directly related to the herein described concept of signal tracking. Further parts of such a receiver, such as an antenna, means for radio frequency, RF, processing, analog to digital converters, etc. are not shown herein, but may be used according to known manners.

The apparatus 1 comprises, in this embodiment, two primary tracking channels 2, each of which are configured to track a received signal. The apparatus 1 further comprises one redundant tracking channel 3. For ease of description, a simplified example of using one redundant tracking channel 3 and two primary tracking channels 2 is chosen. However, any other combination of primary tracking channels 2 and redundant tracking channels 3, with a number of primary tracking channels 2 being higher than a number of redundant tracking channels 3, may be chosen correspondingly.

The apparatus 1 further comprises a first multiplexing module 4, which is configured to tap the two received signals at inputs of the two primary tracking channels 2 and to multiplex the tapped received signals onto an input of the redundant tracking channel 3. With other words, the inputs of the two primary tracking channels 2 are linked and multiplexed to the input of the redundant tracking channel 3.

The apparatus 1 further comprises a comparator module 5, which is configured to compare the multiplexed signal on the redundant tracking channel 3 with each of the received signals on the two primary tracking channels 2 in their respective time slot.

The apparatus 1 further comprises a decision logic module 6, which is configured to determine whether an error occurred in the tracking of either of the two received signals on either of the two primary tracking channels 2 by determining whether a mismatch between an output of either of the two primary tracking channels 2 and a corresponding portion of an output of the redundant tracking channel occurred 3.

In the apparatus 1 shown in Figure 2, the two primary tracking channels 2 and the redundant tracking channel 3 may be implemented as hardware tracking channels. Alternatively, those tracking channels 2, 3 may also be implemented as software tracking channels. The first multiplexing module 4, the comparator module 5, and the decision logic module 6 may be implemented as hardware modules or as software modules, or as a combination thereof. For implementing any of the mentioned entities as software, one or more processors, which are not shown herein, may be used.

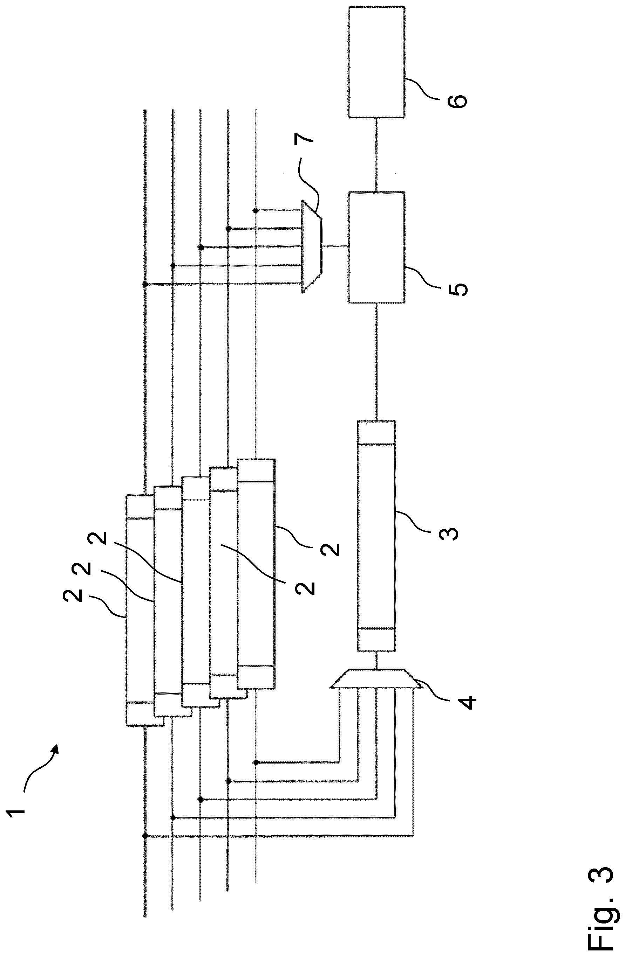

Figure 3 shows a schematic drawing of an apparatus 1 for tracking received signals according to another embodiment of the disclosure. Aspects, which have already been described with respect to the previous Figures, will not be repeated herein but apply accordingly. The apparatus 1 shown in Figure 3 may be a receiver or may be comprised in a receiver. The apparatus shown in Figure 3 may be used to implement the method shown in the flowchart of Figure 1.

In this embodiment, the apparatus 1 comprises five primary tracking channels 2 for tracking received signals. The apparatus 1 further comprises one redundant tracking channel 3. The apparatus 1 further comprises a first multiplexing module 4, which is configured to tap the inputs of the primary tracking channels 2 and to multiplex the signals of the primary tracking channels 2 onto the redundant tracking channel 3.

The apparatus 1 further comprises a second multiplexing module 7, which is configured to tap an output of the primary tracking channels 2, and to multiplex the respective output signals together. The second multiplexing module 7 and the first multiplexing module 4 perform the same multiplexing function on the inputs and the outputs of the primary tracking channels 2 respectively. Therefore, an output of the first multiplexer 4 and an output of the second multiplexer 7 relate to the same received signal in a distinct time slot.

The apparatus 1 further comprises a comparator module 5, which is provided with the outputs of the redundant tracking channel 3 and the multiplexed output of the second multiplexing module 7. The comparator module 5 is configured to compare those outputs of the redundant tracking channel 3 and the multiplexed output of the second multiplexing module 7 corresponding to the above-discussed comparison of signals.

The apparatus 1 further comprises a decision logic module 6 corresponding to the above-described decision logic module 6. The decision logic module 6 may comprise a counter module, not shown herein, that counts a number of times of how often an error on a specific tracking channel 2 has been detected. Alternatively, the counter module may also be implemented separately from the decision logic module 6.

All other aspects of the apparatus 1 shown in Figure 3 may correspond to the aspects discussed with regard to Figures 1 and 2 above.

Figure 4 shows a flowchart of a method performed by a decision logic module, for example the decision logic module 6 discussed above, according to one embodiment of the disclosure. The decision logic performing said method is aware of a current time slot and a corresponding one or more primary tracking channel(s) associated with said time slot, i.e., whose input is linked to the input of the redundant tracking channel in said time slot.

The method shown in Figure 4 will be described with regard to a specific primary tracking channel N, which may be, for example, any one of the above-discussed primary tracking channels 2. The method may be applied, accordingly, to any other primary tracking channel as well. In particular, this method may be performed for every primary tracking channel that is to be supervised with the herein disclosed mechanism, always for the respective primary tracking channel, whose input is multiplexed onto the input of the redundant tracking channel in a current time slot.

In a step 201, the decision logic module receives an output from a comparator module, such as the comparator module 5 discussed above with regard to Figures 2 and 3.

In a step 202, the decision logic module determines whether the output of the primary tracking channel N and the corresponding portion of the primary tracking channel output by the redundant tracking channel matches.

If the result of step 202 is "yes", a step 203 is performed. In step 203, the primary tracking channel N is marked as valid and data on the primary tracking channel N may be further processed normally, without impairment.

In a step 204, the method is stopped and may be started again at step 201 for a next primary tracking channel in a next time slot.

If the result of step 202 is "no", a step 205 is performed. In step 205, it is determined whether a counter for the primary tracking channel N has reached a predetermined threshold. The predetermined threshold is set to a value of how often an error may be detected on the primary tracking channel N before the primary tracking channel N is disabled, as will be clear from the following description.

In case it is determined in step 205 that the predetermined threshold has not yet been reached, a step 206 is performed. In step 206, the channel N is reset. To reset a primary tracking channel in the context of this disclosure, for example, the primary tracking channel may be set idle for a short time, a memory of the primary tracking channel may be erased, the primary tracking channel may be re-started, and the tracking of a respective received signal on the primary tracking channel may be re-started. This may solve, for example, issues that are caused in tracking a signal on the primary tracking channel by a bit-flip, i.e. a soft failure, such that a correct function of the primary tracking channel may be restored.

After the channel N has been reset in step 206, in a step 207, the counter for the primary tracking channel N is increased by +1.

In a step 208, the data on the primary tracking channel N of the current time slot, for which the error has been detected, is marked as invalid.

Afterwards, the method is stopped in step 204 and may be started again at step 201 for a next primary tracking channel in a next time slot.

In case it is determined in step 205 that the predetermined threshold has been reached, a step 209 is performed. In step 209, the primary tracking channel N is disabled. By disabling the primary tracking channel N, the apparatus can continue operation with degraded mode by using the rest of the primary tracking channels.

Before the herein described decision logic method is started, it is assumed that all primary tracking channels are marked as valid, are not disabled, and that values of the counters are 0 for each primary tracking channel. Then, when errors are detected on the channels, the counter of each channel may be increased, until the threshold is reached. If the threshold is reached, it is assumed that an error occurred on the respective channel, which cannot be resolved by resetting the channel anymore, and therefore said respective channel is disabled.

### List of reference signs

- 1: apparatus
- 2: primary tracking channel
- 3: redundant tracking channel
- 4: first multiplexing module
- 5: comparator module
- 6: decision logic module
- 7: second multiplexing module

- 101 - 108: method steps
- 201 - 209: method steps

## Claims

1. A method for tracking received signals, the method comprising:
- tracking (101) at least two received signals on at least two tracking channels (2);
- tapping (102) the received signal of each of the at least two tracking channels (2);
- multiplexing (103) the tapped received signals onto at least one redundant tracking channel (3);
- comparing (106) an output of the at least one redundant tracking channel (3) with an output of each of the at least two tracking channels (2); and
- determining (107) whether an error occurred in the tracking of a first signal of the at least two received signals on a corresponding first tracking channel (2) of the at least two tracking channels (2) by determining whether a mismatch between an output of the first channel and a corresponding portion of an output of the redundant tracking channel occurred (3).

2. The method according to claim 1, wherein the multiplexing of the tapped received signals is a time-division multiplexing of the tapped received signals.

3. The method according to claim 1 or 2, further comprising the steps:
- tapping (104) an output of each of the at least two tracking channels (2); and
- multiplexing (105) the tapped output of each of the at least two tracking channels (2);
wherein comparing (106) the output of the at least one redundant tracking channel (3) with the output of each of the at least two tracking channels (2) comprises:
- comparing the output of the at least one redundant tracking channel (3) with the multiplexed tapped output of each of the at least two tracking channels (2).

4. The method according to any of claims 1 to 3, wherein the tracking of the at least two received signals on the at least two tracking channels (2) is performed continuously.

5. The method according to any of claims 1 to 4, wherein, if occurrence of an error in the tracking of the first signal is determined, at least one of the following steps is performed:
- flagging (208) current data on the first tracking channel (2) as invalid;
- resetting (206) the first tracking channel (2);
- disabling (209) the first tracking channel (2);
- increasing (207) a counter that counts a number of times the first tracking channel (2) has failed.

6. The method according to claim 5, further comprising the step:
- determining (205), whether the counter reached a predetermined threshold; wherein, if the counter reached the predetermined threshold, the first channel is disabled.

7. The method according to any of claims 1 to 6, wherein a time domain is divided into time slots and the tapped received signals are multiplexed onto the at least one redundant tracking channel (3) with one tapped received signal per time slot.

8. An apparatus (1) for tracking received signals, the apparatus (1) comprising:
- at least two tracking channels (2), each of the at least two tracking channels (2) being configured to track a received signal;
- at least one redundant tracking channel (3);
- at least one first multiplexing module (4), configured to tap the received signal of each of the at least two tracking channels (2) and to multiplex the tapped received signals onto the at least one redundant tracking channel (3);
- at least one comparator module (5), configured to compare the multiplexed signal on the at least one redundant tracking channel (3) with each of the received signals on the at least two tracking channels (2); and
- a decision logic module (6), configured to determine whether an error occurred in the tracking of a first signal of the at least two received signals on a corresponding first tracking channel (2) of the at least two tracking channel (2) by determining whether a mismatch between an output of the first channel and a corresponding portion of an output of the redundant tracking channel (3) occurred.

9. The apparatus (1) according to claim 8, further comprising:
- at least one second multiplexing module (7), configured to tap the output of each of the at least two tracking channels (2), and to multiplex the tapped output of each of the at least two tracking channels (2);
wherein the at least one comparator module (5) is specifically configured to compare the output of the at least one redundant tracking channel (3) with the multiplexed tapped output of each of the at least two tracking channels (2) .

10. The apparatus (1) according to claim 9, wherein the at least one first multiplexing module and the at least one second multiplexing module are synchronized to tap a signal of the same tracking channel (2) of the at least two tracking channels (2) at a specific time slot.

11. The apparatus (1) according to any one of claims 8 to 10, wherein the received signals are global navigation satellite system, GNSS, signals.

12. The apparatus (1) according to any one of claims 8 to 11, further comprising a counter module, wherein the counter module is configured to track a number of times an occurrence of an error in the tracking of the first signal has been determined.

13. A computer program product comprising instructions which, when the computer program is executed on a computer, enables the computer to perform the method according to any of claims 1 to 7.

14. A computer-readable storage medium comprising the computer program product according to claim 13.
